# EUROPÄISCHE PATENTSCHRIFT

(11) **EP 0 620 971 B1**
(45) Veröffentlichungstag und Bekanntmachung des Hinweises auf die Patenterteilung: **21.10.1998**
(21) Anmeldenummer: 94103450.6
(22) Anmeldetag: 07.03.1994
(51) Int. Cl.: A01N 43/707, A01N 25/04

(54) **Metamitron enthaltende wässrige Formulierungen**
Aqueous formulations containing metamitron
Formulations aqueuses contenant du métamitron

(30) Priorität: 22.04.1993 DE 4313093
(43) Veröffentlichungstag der Anmeldung: 26.10.1994
(73) Patentinhaber: Stefes Agro GmbH, D-50170 Kerpen (DE)
(72) Erfinder: Müller, Jacki, D-50374 Erftstadt (DE)
(74) Vertreter: Flaccus, Rolf-Dieter, Dr.

(56) Entgegenhaltungen:
- EP-A- 0 082 437
- EP-A- 0 163 598
- EP-A- 0 257 533
- EP-A- 0 514 768
- DE-A- 2 224 161
- GB-A- 1 561 605
- C.R.WORTHING 'The Pesticide Manual, 9th Edition' 1991 , BRITISH CROP PROTECTION COUNCIL , FARNHAM, SURREY, GB * Seite 559 *

## Beschreibung

Die Erfindung betrifft kostengünstig herstellbare, wäßrige Suspensionskonzentrate von Metamitron, die eine gegenüber konventionell produzierten Pulvern oder Granulaten verbesserte Wirksamkeit aufweisen, und ein Verfahren zu ihrer Herstellung.

Metamitron (3-Methyl-4-amino-6-phenyl-1,2,4-triazin-5(4H)-on) ist ein seit Jahren eingesetztes selektives Rübenherbizid.
Die bisher eingesetzten Formulierungen sind wasserdispergierbare Pulver (WP) und wasserdispergierbare Granulate (WDG).

Auch die bisher zugelassenen Metamitron-Mischpräparate sind alle Festformulierungen entweder als Pulver oder als Granulate.

Die dispergierbaren Pulver waren lange Zeit weit verbreitet in der Pflanzenschutzbranche. Ihr entscheidender Nachteil: Die relativ schlechte Dosierbarkeit in Verbund mit einer in der Natur der Formulierung begründeten Tendenz zur Staubbildung brachten ihnen trotz niedriger Herstellungskosten nie einen entscheidenden bzw. hohen Stellenwert in der Palette der Formulierungen.

Die WDG's stäuben kaum im Gegensatz zu den Pulvern und sind wegen ihrer Fließfähigkeit auch leicht zu dosieren. Ihr Nachteil besteht jedoch in der kostenintensiven Herstellungsart und in der relativ groben Vermahlung der Aufschlämmung (slurry) vor der eigentlichen Granulierung.

Ein Vorteil beider Formulierungen ist eine möglichst hohe Konzentrierung des Wirkstoffes bis zu praxisgerechten 70 Gewichtsprozenten, bedingt durch die relativ hohe Aufwandmenge, die zur guten Unkrautvernichtung notwendig ist.

Der Formulierungstyp eines Suspensionskonzentrates auf Wasserbasis schied offenbar aus, da der Wirkstoff zu ca. 1,9 g/l in Wasser löslich ist.

Für den Fachmann gilt eine Löslichkeit von ca. 0,2 g/l als kritische Grenze, da bei Löslichkeiten über diesem Wert mit einem Kristallwachstum zu rechnen ist, das durch Sedimentation der gewachsenen Kristalle zu einer instabilen Formulierung führt.

Darüber hinaus können durch Wachstum gebildete Kristalle in der Formulierung zur Verstopfung der Filter und der Düsen während der Applikation führen, die zu einer ungleichmäßigen Ausbringung führen oder die Ausbringung sogar unmöglich machen.

Ein weiterer kritischer Punkt bei der Herstellung einer wäßrigen Metamitron-Formulierung ist die rasche Photolyse von in Wasser gelöstem Metamitron, bedingt durch seine relativ starke UV-Adsorption bei 330 nm.

Aus der EP-A 0 082 437 sind Suspensionen unter anderem von Metamitron auf Basis organischer Lösungsmittel aus der Gruppe der Alkohole oder Ester bekannt. Bei den angegebenen verwendeten Lösungsmitteln handelt es sich jedoch ausnahmslos um solche, die entweder aufgrund ihrer leichten Entzündbarkeit oder ihrer gesundheitsgefährdenden Wirkung aus Sicherheits- und Gesundheitsgründen nicht in Betracht kommen.

Aus der DE-A 22 24 161 ist bekannt, daß 1,2,4-Triazinone allgemein als "Lösungen, Emulsionen, Suspensionen, Pulver, Pasten und Granulate" hergestellt werden können, ohne jedoch spezielle Wirkstoffeigenschaften wie Hydrolyse, Photolyse und Wasserlöslichkeit zu berücksichtigen. Eigenschaften der verschiedensten Triazinonderivate bleiben hierbei unberücksichtigt. Die aus der DE-A 22 24 161 bekannten herbiziden Mittel enthalten mit Wasserstoff-, Halogen-, Alkyl- und Alkoxy- mit jeweils bis zu 6 Kohlenstoffatomen, Halogenmethyl- mit 1-3 Halogenatomen und/oder Nitrogruppen am Phenylring substituierte Metamitron-Derivate.

Die EP-A 0 257 533 offenbart wässrige fungizide Mittel auf der Basis von Dithiocarbamaten als Wirkstoffe, die dadurch gekennzeichnet sind, daß sie als Tenside eine Kombination von Ethylenoxid-Propylenoxid-Blockpolperen mit Alkanolen oder Arylphenolen, die ethoxyliert und phosphatiert sind, oder deren Salze enthalten.

Die GB-A 1 561 604 beschreibt ein Suspensionskonzentrat mit einem pH-Wert zwischen 4 und 6, welches als aktiven Wirkstoff Aminotriazol und ein oder mehrere wasserunlösliche Herbizide enthält, zusammen mit einem Anteil anorganischer oder organischer Säure zur Erreichung des vorgenannten pH-Wertes, wobei die Säure die Bildung eines unlöslichen Salzes mit Aminotriazol nicht zuläßt.

Der vorliegenden Erfindung lag somit die Aufgabe zugrunde, eine Formulierung bereitzustellen, die die aufgeführten Nachteile überwindet.
Diese Aufgabe wird gelöst durch wäßrige Suspensionskonzentrate von Metamitron gemäß Hauptanspruch. Die Unteransprüche betreffen besonders bevorzugte Ausführungsformen dieses Erfindungsgegenstandes.

Die Erfindung betrifft somit eine wässrige Pflanzenschutzformulierung, enthaltend den Wirkstoff Metamitron, welche gekennzeichnet ist durch die Merkmale:
- sie liegt als stabiles Suspensionskonzentrat auf Wasserbasis mit einem durch Feinstvermahlung herstellbaren mittleren Teilchendurchmesser von ≤ 3µm vor;
- sie weist einen Gehalt an Metamitron zwischen 400 und 800 g/l auf;
- sie enthält nichtionische und/oder ionische Tenside;
- sie ist durch Zusatz von Säuren bzw. sauren Salzen oder sauren Netz- bzw. Dispergiermitteln auf einen pH-Wert zwischen 2 und 7, bevorzugt zwischen 4,5 und 6 eingestellt.

Ein weiterer Gegenstand der Erfindung betrifft ein Verfahren zur Herstellung flüssiger Pflanzenschutzformulierungen mit dem Wirkstoff Metamitron nach Anspruch 14.

Überraschenderweise und für den Fachmann nicht voraussehbar ist jedoch, daß der rübenselektive Wirkstoff Metamitron sehr wohl als sehr stabiles Suspensionskonzentrat auf Wasserbasis in einer adäquaten Konzentration von 400-800 g/l herzustellen ist. Bevorzugt wird ein Metamitron-Gehalt von 600-750 g/l. Ganz besonders geeignet ist eine Konzentration von 700 g/l.

Durch Zuhilfenahme von ausgewählten Dispergiermitteln, die zum Teil auch als Stabilisatoren fungieren, ist es möglich geworden, flüssige, wäßrige, Metamitron enthaltende herbizide Präparate zu formulieren.

Als Tenside sind diejenigen aus den Gruppen der ethoxylierten, ggf. phosphatgruppenhaltigen Tristyrylphenole, ethoxylierte und/oder propoxylierte, ggf. phosphatgruppenhaltige Alkyl(C₈-C₂₄)phenolen oder Ligninsulfonatsalze geeignet. Besonders eignen sich als Tenside solche, welche alpha-(p-Nonylphenyl)-omega-hydroxy-poly(oxypropylen)-Blockpolymer mit Poly(oxyethylen), mit Polyoxypropylen- bzw. Polyoxyethylen-Gehalt von 10-80 mol, vorzugsweise 10-70 mol, weiter bevorzugt 10-50 mol, und einem Molekulargewicht von 1000-10000, vorzugsweise 1000-7200, enthalten.

Ebenfalls mit Vorteil ist eine Mischung verwendbar, die alpha-(p-Nonylphenyl)-hydroxy-polyoxyethylen mit durchschnittlich bis zu 70 mol Ethylenoxid und Polyoxypropylen-Blockpolymer mit Polyoxyethylen mit einem Molekulargewicht von 1500 bis 10000 oder alpha-(p-Nonylphenyl)-omega-hydroxy-polyoxypropylen-Blockpolymer mit einem mit Polyoxypropylen-Gehalt von 10-60 mol, einem Polyoxyethylen-Gehalt von 10-80 mol und einem Molekulargewicht von 1000-7200 enthalten.

Eine weitere Ausführungsform enthält phosphatgruppenhaltige Tenside, die Mono- oder Diphosphorsäureester des alpha-(p-alkylphenyl)-hydroxy-polyoxypropylen-polyoxyethylen alleine oder in Mischung untereinander und/oder im Gemisch mit dem unveresterten Tensid enthalten.

Vorzugsweise liegt der pH-Wert der Formulierung zwischen 2 und 7. Besonders geeignet ist ein pH-Wert der Formulierung zwischen 4,5 und 6.

Der pH-Wert der wässrigen Suspensionskonzentrate kann durch den Zusatz von sauren Salzen, vorzugsweise Ammoniumchlorid oder Ammoniumsulfat, oder durch die Zugabe von Säuren, insbesondere Essigsäure, Phosphorsäure, Zitronensäure oder Oxalsäure eingestellt werden.

Durch den Zusatz von sauren Netz- bzw. Dispergiermitteln kann in einer besonderen Ausführungsform der Erfindung der pH-Wert der Erfindung eingestellt werden. Dabei eignen sich bevorzugt phosphatgruppenhaltige Tenside der vorstehend genannten Zusammensetzung, welche beispielsweise alpha-(p-Nonylphenyl)-omega-hydroxy-polyoxypropylen-polyoxyethylen-dihydrogenphosphat bzw. -monohydrogenphosphat, vorzugsweise in Form der Ammonium-, Calcium, Magnesium-, Monoethanolamin-, Kalium- und Natriumsalze der Ester enthalten.

Eine bevorzugte Ausführungsform weist einen Polyoxyethylengehalt ≤ 30 mol auf, vorteilhaft können ionische Tenside wie Alkyl(C₈-C₂₄)benzolsulfonate zugesetzt werden.

Vorzugsweise liegt in den wäßrigen Suspensionskonzentraten von Metamitron der Gehalt der sauren Netz- bzw. Dispergiermittel zwischen 0,5 und 20 g/l, ganz besonders zwischen 1,0 und 10 g/l.

In einer Ausführungsform erfolgt ein Zusatz von Frostschutzmitteln von 10 bis 80 g/l, wobei sich außergewöhnlich gute Ergebnisse bei einem Gehalt von 30 bis 50 g/l erzielen lassen. In einer bevorzugten Ausführungsform werden vornehmlich Diethylenglykol oder Propandiol eingesetzt. Weitere Diole, beispielsweise 2-Methyl-2,4-pentandiol, können ebenfalls mit Vorteil eingesetzt werden.

In Verbindung mit den allgemein bekannten, kostengünstigen und verbreiteten Verfahren zu Herstellung von Suspensionskonzentraten ist es außerdem gelungen, einen sekundären, nicht zu vernachlässigenden Effekt der Wirksamkeitssteigerung im Mittel um ca. 3% Punkte zu erzielen.

Bei einer nach dieser Art hergestellten Metamitron-Formulierung konnte nach einem Jahr Lagerung im intensiven Tageslicht kein photolytischer Abbau nachgewiesen werden.

Die kumulierte mittlere Teilchengröße liegt nach diesem Herstellungsverfahren bei etwa 2 Mikrometer. Nach der simulierten Lagerung über 2 Jahre (durch einen im CIPAC Handbook beschriebenen Lagertest über 14 Tage bei 54 Grad Celsius) ist der mittlere Teilchendurchmesser nach 3 Wochen auf nur etwa 3 Mikrometer angewachsen.

Der geringe mittlere Teilchendurchmesser von 2 bis 3 Mikrometer im Vergleich zu den Werten von Pulver- und Granulat-Formulierungen von etwa 10 bis 20 Mikrometer ist vermutlich verantwortlich für die bessere Wirkstoffaufnahme bei der Applikation im Nachlaufverfahren und somit für eine gesteigerte Wirksamkeit.

## Patentansprüche

1. Flüssige Pflanzenschutzformulierung enthaltend den Wirkstoff Metamitron, gekennzeichnet durch die Merkmale:
• sie liegt als stabiles Suspensionskonzentrat auf Wasserbasis mit einem durch Feinstvermahlung herstellbaren mittleren Teilchendurchmesser von ≤ 3µm vor;
• sie weist einen Gehalt an Metamitron zwischen 400 und 800 g/l auf;
• sie enthält nichtionische und/oder ionische Tenside;
• sie ist durch Zusatz von Säuren bzw. sauren Salzen oder sauren Netz- bzw. Dispergiermitteln auf einen pH-Wert zwischen 2 und 7, bevorzugt 4, 5 und 6 eingestellt.

2. Wässrige Pflanzenschutzformulierung nach Anspruch 1, gekennzeichnet durch einen Metamitrongehalt von 600-750 g/l.

3. Pflanzenschutzformulierung nach Anspruch 1 oder 2, dadurch gekennzeichnet, daß die Tenside aus den Gruppen der ethoxylierten, gegebenenfalls Phosphatgruppen enthaltenden Tristyrylphenole, ethoxylierten und/oder propoxylierten Alkyl (C₈-C₂₄) phenole oder Ligninsulfonatsalze gewählt sind.

4. Pflanzenschutzformulierung nach Anspruch 3, dadurch gekennzeichnet, daß als Tensid alpha- (p-alkyl (C₈-C₂₄)phenyl)-omega-hydroxy-polyoxypropylen)-Blockpolymer mit Poly (oxyethylen) zugesetzt ist.

5. Pflanzenschutzformulierung nach Anspruch 3, dadurch gekennzeichnet, daß als Tensid alpha-(p-Nonylphenyl)omega-hydroxy-polyoxypropylen-Blockpolymer mit Polyoxyethylen, mit einem Polyoxypropylen- bzw. Polyoxyethylen-Gehalt von 10-80 mol, vorzugsweise von 10-70 mol, weiter bevorzugt 10-50 mol und einem Molekulargewicht von 1000- 10000, vorzugsweise 1000-7200, zugesetzt ist.

6. Pflanzenschutzformulierung nach einem der Ansprüche 1 bis 5, dadurch gekennzeichnet, daß eine Mischung von alpha-(p-Nonylphenyl)-omega-hydroxy-polyoxyethylen-polyoxyprpylen mit seinen Dihydrogenphosphat- und/oder Monohydrogenphosphatestern und/oder den entsprechenden Ammonium-., Calcium-, Magnesium-, Monoethanolamin-, Kalium- und Natriumsalzen der Phosphatester zugesetzt ist.

7. Pflanzenschutzformulierung nach Anspruch 1, dadurch gekennzeichnet, daß der pH-Wert durch Zusatz von Anmoniumchlorid oder Ammoniumsulfat eingestellt ist.

8. Pflanzenschutzformulierung nach Anspruch 1, dadurch gekennzeichnet, daß der pH-Wert durch Zusatz von Essigsäure, Phosphorsäure, Zitronensäure oder Oxalsäure eingestellt ist.

9. Pflanzenschutzformulierung nach Anspruch 1, dadurch gekennzeichnet, daß der pH-Wert durch Zusatz von als Phosphatester vorliegenden Tensiden eingestellt ist.

10. Pflanzenschutzformulierung nach Anspruch 1,dadurch gekennzeichnet, daß der Gehalt an sauren Netz- bzw. Dispergiermittel zwischen 0,5 und 20 g/l liegt.

11. Pflanzenschutzformulierung nach Anspruch 1, dadurch gekennzeichnet, daß der Gehalt an sauren Netz- bzw. Dispergiermittel zwischen 1,0 und 10 g/l liegt.

12. Pflanzenschutzformulierung nach einem der Ansprüche 1-11, gekennzeichnet durch einen Zusatz von Frostschutzmitteln oder Diolen von 10 bis 80 g/l, vorzugsweise 30 bis 50 g/l.

13. Pflanzenschutzformulierung nach einem der Ansprüche 1-12, dadurch gekennzeichnet, daß Diethylenglykol, Propandiol oder 2-Methyl-2, 4-pentandiol zugesetzt ist.

14. Verfahren zur Herstellung einer Pflanzenschutzformulierung nach einem der Ansprüche 1-13, dadurch gekennzeichnet, daß es durch Feinstvermahlung mittels Kolloidmühlen hergestellt wird.

15. Verfahren nach Anspruch 14, dadurch gekennzeichnet, daß durch die Feinstvermahlung ein mittlerer Teilchendurchmesser von ≤ 3 µm erzielt wird.

## Claims

1. Liquid plant protection formulation containing the active agent metamitron, characterized by the features:
- it is present as a stable water-based suspension concentrate having a mean particle diameter of ≤ 3 µm which can be obtained through pulverization;
- it has a content of between 400 and 800 g/l of metamitron;
- it contains non-ionic and/or ionic surface-active agents;
- it is set at a pH between 2 and 7, preferably 4, 5 and 6, by addition of acids or acidic salts, respectively, or of acidic wetting agents or dispersing agents, respectively.

2. Aqueous plant protection formulation according to claim 1, characterized by a metamitron content of 600 - 750 g/l.

3. Plant protection formulation according to claim 1 or 2, characterized in that the surface-active agents are selected from the groups of ethoxylated, optionally phosphate groups-containing tristyryl phenols, ethoxylated and/or propoxylated alkyl (C₈-C₂₄) phenols or ligninsulfonate salts.

4. Plant protection formulation according to claim 3, characterized in that alpha-(p-alkyl(C₈-C₂₄)phenyl)-omega-hydroxy-polyoxypropylene) block polymer with poly(oxyethylene) is added as surface-active agent.

5. Plant protection formulation according to claim 3, characterized in that as surface-active agent there is added alpha-(p-nonylphenyl)-omega-hydroxy-polyoxypropylene block polymer with polyoxyethylene, having a polyoxypropylene or polyoxyethylene content, respectively, of 10 - 80 mol, preferably of 10 - 70 mol, further preferred 10 - 50 mol, and a molecular weight of 1000 - 10000, preferably 1000 - 7200.

6. Plant protection formulation according to one of claims 1 to 5, characterized in that there is added a mixture of alpha-(p-nonylphenyl)-omega-hydroxy-polyoxy-ethylene-polyoxypropylene with its dihydrogen phosphate and/or monohydrogen phosphate esters and/or the corresponding ammonium, calcium, magnesium, monoethanolamine, potassium and sodium salts of the phosphate esters.

7. Plant protection formulation according to claim 1, characterized in that the pH is adjusted through addition of ammonium chloride or ammonium sulfate.

8. Plant protection formulation according to claim 1, characterized in that the pH is adjusted by addition of acetic acid, phosphoric acid, citric acid or oxalic acid.

9. Plant protection formulation according to claim 1, characterized in that the pH is adjusted through addition of surface-active agents present as phosphate esters.

10. Plant protection formulation according to claim 1, characterized in that the content of acid wetting agents or dispersing agents, respectively, lies between 0.5 and 20 g/l.

11. Plant protection formulation according to claim 1, characterized in that the content of acidic wetting agents or dispersing agents, respectively, lies between 1.0 and 10 g/l.

12. Plant protection formulation according to one of claims 1 - 11, characterized by an addition of antifreeze agents or diols of from 10 to 80 g/l, preferably 30 to 50 g/l.

13. Plant protection formulation according to one of claims 1 to 12, characterized in that diethylene glycol, propanediol or 2-methyl-2,4-pentanediol are added.

14. Method for producing a plant protection formulation according to any one of claims 1 to 13, characterized in that said plant protection formulation is produced through pulverization by means of colloid mills.

15. Method according to claim 14, characterized in that by way of said pulverization there is obtained a mean particle diameter of ≤ 3 µm.

## Revendications

1. Formulation phytosanitaire liquide contenant le principe actif métamitron, caractérisée par les particularités :
- elle se trouve sous forme d'un concentré en suspension stable à base d'eau avec une granulométrie moyenne inférieure ou égale à 3 µm pouvant être préparée par broyage ultra-fin ;
- elle présente une teneur en métamitron entre 400 et 800 g/l ;
- elle contient des surfactants non-ioniques et/ou ioniques ;
- elle est réglée par l'addition d'acides, respectivement de sels ou d'agents mouillants acides, respectivement agents de dispersions acides, à un pH entre 2 et 7, de préférence 4, 5 et 6.

2. Formulation phytosanitaire aqueuse selon la revendication 1, caractérisée par une teneur en métamitron de 600 à 750 g/l.

3. Formulation phytosanitaire selon la revendication 1 ou 2, caractérisée en ce que les surfactants sont choisis dans les groupes des tristyrylphénols éthoxylés, contenant éventuellement des groupes phosphates, des (alkyle en C₈-C₂₄)phénols éthoxylés et/ou propoxylés ou des sels de sulfonate de lignine.

4. Formulation phytosanitaire selon la revendication 3, caractérisée en ce qu'on y ajoute à titre de surfactant du polymère séquencé alpha-(p-(alkyle en C₈-C₂₄)phényl)-oméga-hydroxy-polyoxypropylène) avec du poly(oxyéthylène).

5. Formulation phytosanitaire selon la revendication 3, caractérisée en ce qu'on y ajoute à titre de surfactant du polymère séquencé alpha-(p-nonylphényl)-oméga-hydroxy-polyoxypropylène avec du polyoxyéthylène avec une teneur en polyoxypropylène, respectivement en polyoxyéthylène de 10 à 80 moles, de préférence de 10 à 70 moles, d'une manière davantage préférée de 10 à 50 moles et un poids moléculaire de 1.000 à 10.000, de préférence de 1.000 à 7.200.

6. Formulation phytosanitaire selon l'une des revendications 1 à 5, caractérisée en ce qu'on y ajoute un mélange d'alpha-(p-nonylphényl)-oméga-hydroxy-polyoxyéthylène-polyoxypropylène avec ses esters de dihydrogénophosphate et /ou de monohydrogénophosphate et/ou des sels d'ammonium, de calcium, de magnésium, de monoéthanolamine, de potassium et de sodium correspondants des esters de phosphate.

7. Formulation phytosanitaire selon la revendication 1, caractérisée en ce que le pH est réglé par l'addition de chlorure d'ammonium ou de sulfate d'ammonium.

8. Formulation phytosanitaire selon la revendication 1, caractérisée en ce que le pH est réglé par l'addition d'acide acétique, d'acide phosphorique, d'acide citrique ou d'acide oxalique.

9. Formulation phytosanitaire selon la revendication 1, caractérisée en ce que le pH est réglé par l'addition de surfactants se trouvant sous forme d'ester de phosphate.

10. Formulation phytosanitaire selon la revendication 1, caractérisée en ce que la teneur en agents mouillants acides, respectivement agents de dispersion acides se situe entre 0,5 et 20 g/l.

11. Formulation phytosanitaire selon la revendication 1, caractérisée en ce que la teneur en agents mouillants acides, respectivement agents de dispersion acides se situe entre 1,0 et 10 g/l.

12. Formulation phytosanitaire selon l'une des revendications 1 à 11, caractérisée par l'addition de produits antigel ou de diols de 10 à 80 g/l, de préférence de 30 à 50 g/l.

13. Formulation phytosanitaire selon l'une des revendications 1 à 12, caractérisée en ce qu'on ajoute du diéthylèneglycol, du propanediol ou du 2-méthyl-2,4-pentanediol.

14. Procédé de préparation d'une formulation phytosanitaire selon l'une des revendications 1 à 13, caractérisé en ce qu'elle est préparée par broyage ultra-fin au moyen de concasseurs de colloïdes.

15. Procédé selon la revendication 14, caractérisé en ce qu'on obtient une granulométrie moyenne inférieure ou égale à 3 µm par broyage ultra-fin.
